# EUROPÄISCHE PATENTANMELDUNG

(11) **EP 4 083 482 A1**
(43) Veröffentlichungstag der Anmeldung: **02.11.2022**
(21) Anmeldenummer: 22167090.4
(22) Anmeldetag: 07.04.2022
(51) Int. Cl.: F16K 11/085, F16K 27/06

(54) **VENTIL UND FLÜSSIGKEITSTANK FÜR EIN FLÜSSIGKEITSSYSTEM, SOWIE FLÜSSIGKEITSSYSTEM FÜR EIN FAHRZEUG**

(30) Priorität: 28.04.2021 DE 102021110941
(71) Anmelder: HELLA GMBH & CO. KGAA, 59552 Lippstadt (DE)
(72) Erfinder: BEWERMEYER, Frank, 33142 Büren (DE); FISCHER, Finn Malte, 33106 Paderborn (DE); GROTHE, Benjamin, 58739 Wickede (DE); NIESS, Dominik, 59555 Lippstadt (DE); TIEMEYER, Sebastian, 44143 Dortmund (DE)
(74) Vertreter: Bringemeier, Ulrich Heinz

(57) **Zusammenfassung**

Die vorliegende Erfindung betrifft ein Ventil (6) für ein Flüssigkeitssystem (2) eines Fahrzeugs, umfassend ein Ventilgehäuse (8) mit einer Mehrzahl von Ventilgehäuseöffnungen (A, B, C, D, E), einen um eine Drehachse (10) drehbar angeordneten Ventilkörper (34), eine Ventildichtung (36), einen Ventilantrieb und eine zu den Ventilgehäuseöffnungen (A, B, C, D, E) korrespondierende Mehrzahl von Anschlussstutzen (12, 14, 16, 18, 20),
dadurch gekennzeichnet,
dass die Anschlussstutzen (12, 14, 16, 18, 20) an einem freien Ende des jeweiligen Anschlussstutzens (12, 14, 16, 18, 20) im Querschnitt eine kreisrunde Strömungsdurchtrittsfläche und die zu den Anschlussstutzen (12, 14, 16, 18, 20) korrespondierenden Ventilgehäuseöffnungen (A, B, C, D, E) jeweils einen im Wesentlichen rechteckigen Querschnitt aufweisen, wobei die jeweilige Ventilgehäuseöffnung (A, B, C, D, E) größer als die Strömungsdurchtrittsfläche an dem freien Ende des dazu korrespondierenden Anschlussstutzens (12, 14, 16, 18, 20) ist, und wobei sich die Strömungsdurchtrittsflächen der Anschlussstutzen (12, 14, 16, 18, 20) von dem freien Ende des jeweiligen Anschlussstutzens (12, 14, 16, 18, 20) bis zu der jeweils korrespondierenden Ventilgehäuseöffnung (A, B, C, D, E) diffusorartig erweitern und stufenlos in die jeweilige Ventilgehäuseöffnung (A, B, C, D, E) übergehen.

Ferner betrifft die Erfindung einen Flüssigkeitstank (4) und ein Flüssigkeitssystem (2) eines Fahrzeugs.

## Beschreibung

Die vorliegende Erfindung bezieht sich auf ein Ventil für ein Flüssigkeitssystem der im Oberbegriff des Anspruchs 1 genannten Art, einen Flüssigkeitstank für ein Flüssigkeitssystem und ein Flüssigkeitssystem eines Fahrzeugs.

Derartige Ventile und Flüssigkeitstanks für Flüssigkeitssysteme sowie Flüssigkeitssysteme für Fahrzeuge sind aus dem Stand der Technik in zahlreichen Ausführungsvarianten bereits bekannt. Die bekannten Ventile für Flüssigkeitssysteme von Fahrzeugen umfassen dabei ein Ventilgehäuse mit einer Mehrzahl von Ventilgehäuseöffnungen, einen in dem Ventilgehäuse um eine Drehachse drehbar angeordneten Ventilkörper mit mindestens einem strömungsleitenden Verbindungskanal zur strömungsleitenden Verbindung von mindestens zwei Ventilgehäuseöffnungen der Mehrzahl von Ventilgehäuseöffnungen, eine zwischen dem Ventilgehäuse und dem Ventilkörper angeordnete Ventildichtung mit zu den Ventilgehäuseöffnungen korrespondierenden Ventildichtungsöffnungen, einen Ventilantrieb zur automatischen Drehung des Ventilkörpers um die Drehachse und eine zu den Ventilgehäuseöffnungen korrespondierende Mehrzahl von Anschlussstutzen zur strömungsleitenden Verbindung des Ventils mit einem Rest des Flüssigkeitssystems. Die aus dem Stand der Technik bekannten diesbezüglichen Anschlussstutzen weisen üblicherweise im Querschnitt eine kreisrunde Innenkontur und eine kreisrunde Außenkontur auf.

Hier setzt die vorliegende Erfindung an.

Der vorliegenden Erfindung liegt die Aufgabe zugrunde, ein Ventil für ein Flüssigkeitssystem, einen Flüssigkeitstank für ein Flüssigkeitssystem und ein Flüssigkeitssystem eines Fahrzeugs zu verbessern.

Diese Aufgabe wird durch ein Ventil für ein Flüssigkeitssystem eines Fahrzeugs mit den Merkmalen des Anspruchs 1 gelöst, das dadurch gekennzeichnet ist, dass die Anschlussstutzen an einem freien Ende des jeweiligen Anschlussstutzens im Querschnitt eine kreisrunde Strömungsdurchtrittsfläche und die zu den Anschlussstutzen korrespondierenden Ventilgehäuseöffnungen jeweils einen im Wesentlichen rechteckigen Querschnitt aufweisen, wobei die jeweilige Ventilgehäuseöffnung größer als die Strömungsdurchtrittsfläche an dem freien Ende des dazu korrespondierenden Anschlussstutzens ist, und wobei sich die Strömungsdurchtrittsflächen der Anschlussstutzen von dem freien Ende des jeweiligen Anschlussstutzens bis zu der jeweils korrespondierenden Ventilgehäuseöffnung diffusorartig erweitern und stufenlos in die jeweilige Ventilgehäuseöffnung übergehen. Ferner wird dieses Problem durch einen Flüssigkeitstank für ein Flüssigkeitssystem eines Fahrzeugs mit den Merkmalen des Patentanspruchs 8 und ein Flüssigkeitssystem eines Fahrzeugs mit den Merkmalen des Patentanspruchs 10 gelöst. Bei dem Fahrzeug kann es sich beispielsweise um ein als Kraftfahrzeug ausgebildetes Landfahrzeug handeln. Rein exemplarisch seien hier lediglich als ein Elektrofahrzeug oder als ein sogenanntes Hybridfahrzeug ausgebildete Kraftfahrzeuge genannt. Jedoch ist die Erfindung auch bei anderen Landfahrzeugen sowie bei Luft- und Seefahrzeugen vorteilhaft einsetzbar. Bei dem erfindungsgemäßen Ventil kann es sich bevorzugt um ein sogenanntes Mehrwegeventil handeln. Dies ist jedoch nicht zwingend der Fall. Die Unteransprüche betreffen vorteilhafte Weiterbildungen der Erfindung.

Ein wesentlicher Vorteil der Erfindung liegt insbesondere darin, dass ein Ventil für ein Flüssigkeitssystem, ein Flüssigkeitstank für ein Flüssigkeitssystem eines Fahrzeugs und ein Flüssigkeitssystem eines Fahrzeugs verbessert sind.

Aufgrund der erfindungsgemäßen Ausbildung des Ventils für ein Flüssigkeitssystem eines Fahrzeugs, des Flüssigkeitstanks für ein Flüssigkeitssystem eines Fahrzeugs und des Flüssigkeitssystems für ein Fahrzeug sind das vorgenannte Ventil, der vorgenannte Flüssigkeitstank und das vorgenannte Flüssigkeitssystem für ein Fahrzeug zum einen auf konstruktiv und fertigungstechnisch besonders einfache Art und Weise realisierbar. Zum anderen ist dadurch eine strömungsoptimierte Formgebung der Anschlussstutzen und der dazu korrespondierenden Ventilgehäuseöffnungen verwirklicht. Dies deshalb, weil es die Erfindung ermöglicht, dass die Anschlussstutzen und die dazu korrespondierenden Ventilgehäuseöffnungen jeweils, im Unterschied zum Stand der Technik, auch Querschnitte mit nicht kreisrunden Innenkonturen aufweisen. Die Querschnitte mit im Wesentlichen rechteckigen Innenkonturen weisen eine lichte Weite auf, die jeweils größer als die eines Querschnitts mit kreisrunder Innenkontur ist. Erfindungsgemäß ist es somit möglich, den vorhandenen Bauraum für die Ventilgehäuseöffnungen bei dem Ventilgehäuse besonders gut auszunutzen. Der Bauraum für die Ventilgehäuseöffnungen bei dem Ventilgehäuse ist umfangsseitig, also konzentrisch um die Drehachse des Ventilkörpers herum, stark limitiert. Entsprechend können beispielsweise kreisrunde Ventilgehäuseöffnungen nur eingeschränkt vergrößert werden, um die Strömung durch die jeweilige Ventilgehäuseöffnung und den dazu korrespondierenden Anschlussstutzen zu optimieren. Hier schafft die vorliegende Erfindung Abhilfe.

Grundsätzlich ist das erfindungsgemäße Ventil nach Art, Funktionsweise, Material und Dimensionierung in weiten geeigneten Grenzen frei wählbar.

Eine besonders vorteilhafte Weiterbildung des erfindungsgemäßen Ventils sieht vor, dass die im Querschnitt im Wesentlichen rechteckigen Ventilgehäuseöffnungen zumindest teilweise, bevorzugt alle Ventilgehäuseöffnungen, jeweils derart ausgebildet sind, dass eine senkrecht zu der Drehachse verlaufende Breite dieser Ventilgehäuseöffnung kleiner als eine parallel zu der Drehachse verlaufende Höhe dieser Ventilgehäuseöffnung ausgebildet ist, bevorzugt, dass sich die Breite entlang der konzentrisch zu der Drehachse angeordneten Ventilgehäuseöffnung erstreckt. Hierdurch ist die Ausnutzung des vorhandenen Bauraums für die Ventilgehäuseöffnungen wesentlich verbessert. Dies gilt insbesondere für die bevorzugten Ausführungsformen dieser Weiterbildung.

Eine weitere vorteilhafte Weiterbildung des erfindungsgemäßen Ventils sieht vor, dass Ecken der im Querschnitt im Wesentlichen rechteckigen Ventilgehäuseöffnungen verrundet ausgebildet sind. Auf diese Weise ist die Strömung durch die jeweilige Ventilgehäuseöffnung des Ventilgehäuses zusätzlich verbessert.

Eine andere vorteilhafte Weiterbildung des erfindungsgemäßen Ventils sieht vor, dass das freie Ende mindestens eines Anschlussstutzens als ein Schlauchanschluss, bevorzugt als ein Kupplungsteil einer Schlauchkupplung, besonders bevorzugt als ein Schnellkupplungsteil, ausgebildet ist. Hierdurch ist der strömungsleitende Anschluss des erfindungsgemäßen Ventils an den Rest des Flüssigkeitssystems wesentlich vereinfacht. Dies gilt besonders für die bevorzugte und insbesondere für die besonders bevorzugte Ausführungsform dieser Weiterbildung. Schläuche und Schlauchkupplungen sind Standardbauteile, die in vielfältigen Ausbildungen verfügbar und für eine Vielzahl von voneinander verschiedenen Anwendungsfällen einsetzbar sind.

Eine weitere vorteilhafte Weiterbildung des erfindungsgemäßen Ventils sieht vor, dass die Anschlussstutzen gemeinsam aus einer einzigen ersten Kanalschale und aus einer einzigen zweiten Kanalschale ausgebildet sind, wobei die erste Kanalschale gleichzeitig als das Ventilgehäuse ausgebildet ist, das zur Ausbildung der Anschlussstutzen mit der zweiten Kanalschale verbindbar ist. Auf diese Weise ist das erfindungsgemäße Ventil auf konstruktiv und fertigungstechnisch besonders einfache Art realisierbar. Ferner ist dadurch eine Zentralisierung der Bauteile eines Flüssigkeitssystems für ein Fahrzeug ermöglicht. Die erste und/oder die zweite Kanalschale können/kann dabei als ein Kunststoffspritzgussteil ausgebildet sein.

Eine andere vorteilhafte Weiterbildung des erfindungsgemäßen Ventils sieht vor, dass das Ventilgehäuse und/oder der Ventilkörper derart formbar ausgebildet sind/ist, dass eine der Ventildichtung zugewandte Dichtungsseite des Ventilgehäuses und/oder des Ventilkörpers nach einem Entformen des Ventilgehäuses und/oder des Ventilkörpers im Wesentlichen gratfrei ausgebildet ist. Hierdurch ist gewährleistet, dass die Ventildichtung und damit das erfindungsgemäße Ventil, auch ohne eine etwaige aufwendige Nachbearbeitung der vorgenannten Dichtungsseiten, eine lange Betriebszeit ermöglicht. Dies ist fertigungstechnisch beispielsweise derart umsetzbar, dass eine Formtrennung bei dem oben genannten Kunststoffspritzgussteil an der Dichtungsseite des Ventilgehäuses konstruktiv vermieden wird.

Eine weitere vorteilhafte Weiterbildung des erfindungsgemäßen Ventils sieht vor, dass das Ventilgehäuse als ein integraler Bestandteil eines Flüssigkeitstanks des Flüssigkeitssystems, bevorzugt eines Kühlmitteltanks des Fahrzeugs zur Bevorratung von in dem als Kühlmittelsystem ausgebildeten Flüssigkeitssystem geführten Kühlmittel, ausgebildet ist. Auf diese Weise ist zum einen die Anzahl der Bauteile des Flüssigkeitssystems reduziert. Entsprechend vereinfacht sich die Logistik, die Lagerhaltung und die Fertigung des Flüssigkeitssystems für ein Fahrzeug. Zum anderen ist dadurch eine sehr kompakte und damit platzsparende Bauweise des Flüssigkeitssystems ermöglicht.

Grundsätzlich ist der erfindungsgemäße Flüssigkeitstank für ein Flüssigkeitssystem eines Fahrzeugs nach Art, Funktionsweise, Material, Dimensionierung und Anordnung in dem Flüssigkeitssystem und an dem Fahrzeug, analog zu dem erfindungsgemäßen Ventil, in weiten geeigneten Grenzen frei wählbar.

Eine vorteilhafte Weiterbildung des erfindungsgemäßen Flüssigkeitstanks sieht vor, dass das Tankgehäuse mehrschalig ausgebildet ist und eine Mehrzahl von Tankgehäuseschalen aufweist, wobei eine der Tankgehäuseschalen gleichzeitig als das Ventilgehäuse ausgebildet ist, bevorzugt, dass das Ventilgehäuse als eine unterste Tankgehäuseschale des Tankgehäuses ausgebildet ist. Hierdurch ist das Tankgehäuse des Flüssigkeitstanks mit dem darin integrierten Ventilgehäuse auf konstruktiv und fertigungstechnisch besonders einfache Art und Weise realisierbar. Dies gilt insbesondere für die bevorzugte Ausführungsform dieser Weiterbildung. Beispielsweise kann das Tankgehäuse dreischalig ausgebildet sein und eine oberste Tankgehäuseschale, eine mittlere Tankgehäuseschale und eine unterste Tankgehäuseschale aufweisen. Dies ist jedoch nicht zwingend der Fall.

Anhand der beigefügten, grob schematischen Zeichnung wird die Erfindung nachfolgend näher erläutert. Dabei zeigt:
- Fig. 1: ein erstes Ausführungsbeispiel eines Fahrzeugs mit einem erfindungsgemäßen Flüssigkeitssystem in einer teilweisen, perspektivischen Ansicht,
- Fig. 2: das erfindungsgemäße Ventil des ersten Ausführungsbeispiels in einer ersten teilweisen, perspektivischen Einzeldarstellung,
- Fig. 3: das erfindungsgemäße Ventil des ersten Ausführungsbeispiels in einer zweiten teilweisen, perspektivischen Einzeldarstellung,
- Fig. 4: das erfindungsgemäße Ventil des ersten Ausführungsbeispiels in einer dritten teilweisen, perspektivischen Einzeldarstellung,
- Fig. 5: ein zweites Ausführungsbeispiel eines Fahrzeugs mit einem erfindungsgemäßen Flüssigkeitssystem in einer teilweisen, geschnittenen Seitenansicht und
- Fig. 6: das zweite Ausführungsbeispiel in einer teilweisen, perspektivischen Ansicht.

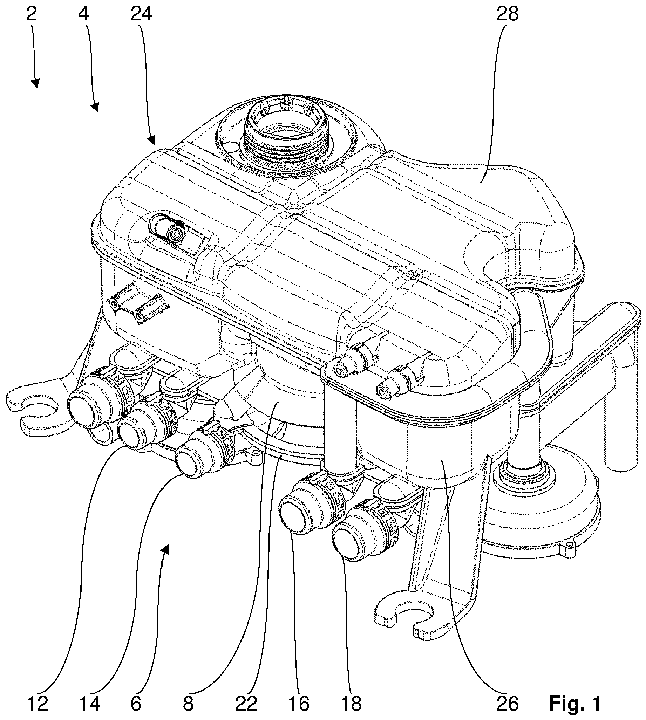

In den Fig. 1 bis 4 ist ein erstes Ausführungsbeispiel eines Fahrzeugs mit einem erfindungsgemäßen Flüssigkeitssystem rein exemplarisch dargestellt.

Das Fahrzeug ist hier als ein Kraftfahrzeug, nämlich ein reines Elektrofahrzeug, ausgebildet und nicht näher dargestellt.

Das Flüssigkeitssystem 2 für das Fahrzeug ist bei dem vorliegenden Ausführungsbeispiel als ein Kühlmittelsystem zur Kühlung der Antriebsbatterie, des Antriebsmotors nebst der dazu korrespondierenden Leistungselektronik sowie zur Kühlung eines Kältemittelkreislaufs zur Klimatisierung eines Innenraums des Fahrzeugs ausgebildet. Die Antriebsbatterie, der Antriebsmotor mit der korrespondierenden Leistungselektronik und der Kältemittelkreislauf des Fahrzeugs sind hier ebenfalls nicht näher dargestellt und beispielsweise auf dem Fachmann an sich bekannte Art und Weise ausgebildet.

Das als Kühlmittelsystem ausgebildete Flüssigkeitssystem 2 umfasst einen als Kühlmitteltank ausgebildeten Flüssigkeitstank 4 zur Bevorratung einer als Kühlmittel ausgebildeten, nicht dargestellten Flüssigkeit des Fahrzeugs, insgesamt drei mit dem Flüssigkeitstank strömungsleitend verbundene und als Kühlmittelkreisläufe ausgebildete Flüssigkeitskreisläufe, in denen die Flüssigkeit zirkuliert, und ein zum einen mit den Flüssigkeitskreisläufen und zum anderen mit dem Flüssigkeitstank strömungsleitend verbundenes Ventil 6 zur Steuerung der als Kühlmittelströme ausgebildeten Flüssigkeitsströme der Flüssigkeit in dem Flüssigkeitssystem 2. Siehe hierzu die Fig. 1.

Das Ventil 6 ist hier als ein sogenanntes Mehrwegeventil ausgebildet und umfasst ein Ventilgehäuse 8 mit einer Mehrzahl von Ventilgehäuseöffnungen, einen in dem Ventilgehäuse 8 um eine Drehachse 10 drehbar angeordneten Ventilkörper mit mindestens einem strömungsleitenden Verbindungskanal zur strömungsleitenden Verbindung von mindestens zwei Ventilgehäuseöffnungen der Mehrzahl von Ventilgehäuseöffnungen, eine zwischen dem Ventilgehäuse 8 und dem Ventilkörper angeordnete Ventildichtung mit zu den Ventilgehäuseöffnungen korrespondierenden Ventildichtungsöffnungen, einen Ventilantrieb zur automatischen Drehung des Ventilkörpers um die Drehachse 10 und eine zu den Ventilgehäuseöffnungen korrespondierende Mehrzahl von Anschlussstutzen 12, 14, 16, 18, 20 zur strömungsleitenden Verbindung des Ventils 6, nämlich der Ventilgehäuseöffnungen, mit einem Rest des Flüssigkeitssystems 2.

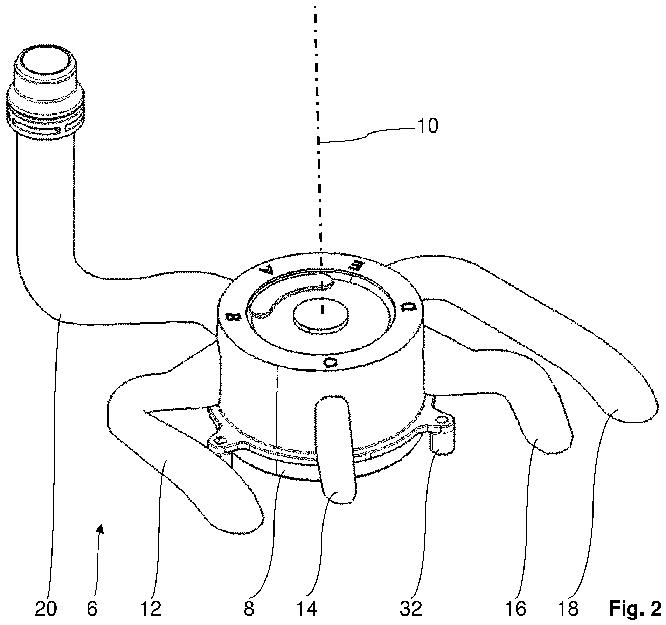

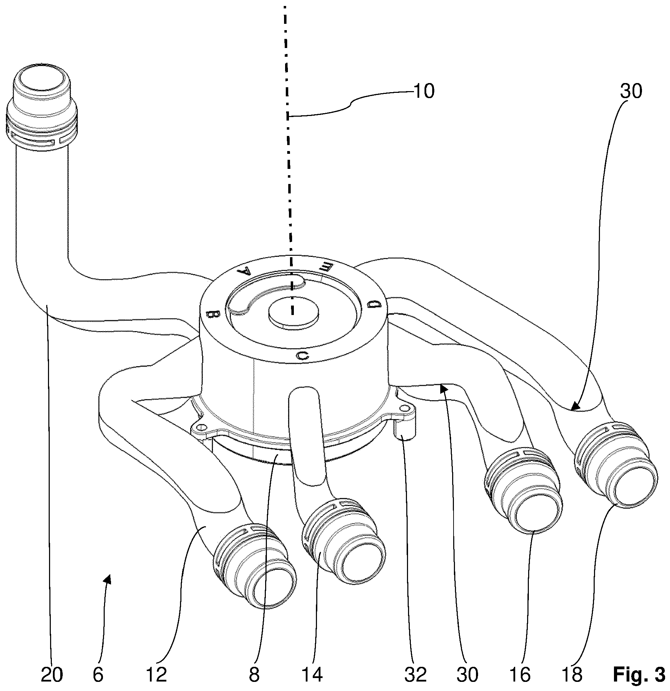

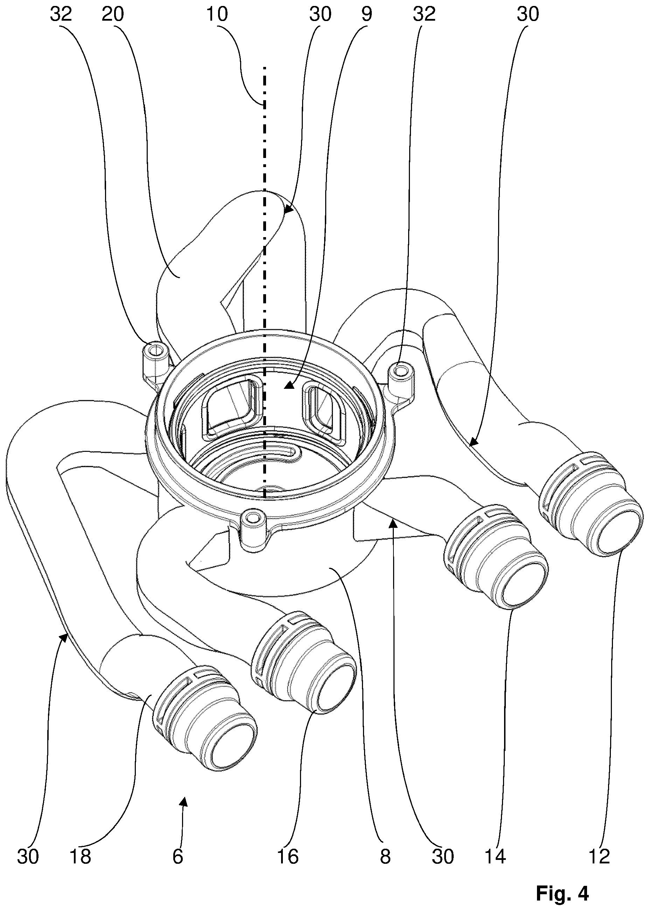

Die Ventilgehäuseöffnungen des Ventilgehäuses 8 des Ventils 6 sind in der Fig. 4 lediglich teilweise dargestellt, jedoch in den Fig. 2 und 3 mit auf dem Ventilgehäuse 8 eingezeichneten Buchstaben A bis E gekennzeichnet. Der Ventilkörper mit dem mindestens einen Verbindungskanal, die Ventildichtung mit den zu den Ventilgehäuseöffnungen korrespondierend ausgebildeten Ventildichtungsöffnungen und der Ventilantrieb sind in den Fig. 1 bis 4 nicht dargestellt.

Die Anschlussstutzen 12, 14, 16, 18, 20 sind bei dem vorliegenden Ausführungsbeispiel gemeinsam aus einer einzigen ersten Kanalschale und aus einer einzigen zweiten Kanalschale 22 ausgebildet, wobei die erste Kanalschale gleichzeitig als das Ventilgehäuse 8 ausgebildet ist, das zur Ausbildung der Anschlussstutzen 12, 14, 16, 18, 20 mit der zweiten Kanalschale 22 verbindbar ist. Das als erste Kanalschale ausgebildete Ventilgehäuse 8 und die zweite Kanalschale 22 sind bei dem vorliegenden Ausführungsbeispiel jeweils als ein Kunststoffspritzgussteil ausgebildet. Hierbei kann insbesondere bei der Herstellung des Ventilgehäuses 8 der Einsatz von Schiebern erfolgen. Zwecks Ausbildung der Anschlussstutzen 12, 14, 16, 18, 20 werden die beiden Kanalschalen 8, 22 mittels Kunststoffschweißen miteinander verbunden. Grundsätzlich sind jedoch auch andere Verbindungstechniken denkbar. Der Fachmann wird, je nach den Erfordernissen des Einzelfalls, die geeignete Verbindungstechnik zur Verbindung der beiden Kanalschalen auswählen. Rein exemplarisch sei hier lediglich auf Klebetechniken und Verschraubungen hingewiesen.

Zwecks Strömungsoptimierung weisen die Anschlussstutzen 12, 14, 16, 18, 20 des vorliegenden Ausführungsbeispiels an einem freien Ende des jeweiligen Anschlussstutzens 12, 14, 16, 18, 20 im Querschnitt eine kreisrunde Strömungsdurchtrittsfläche und die zu den Anschlussstutzen 12, 14, 16, 18, 20 korrespondierenden Ventilgehäuseöffnungen A bis E jeweils einen im Wesentlichen rechteckigen Querschnitt auf, wobei die jeweilige Ventilgehäuseöffnung A bis E größer als die Strömungsdurchtrittsfläche an dem freien Ende des dazu korrespondierenden Anschlussstutzens 12, 14, 16, 18, 20 ist, und wobei sich die Strömungsdurchtrittsflächen der Anschlussstutzen 12, 14, 16, 18, 20 von dem freien Ende des jeweiligen Anschlussstutzens 12, 14, 16, 18, 20 bis zu der jeweils korrespondierenden Ventilgehäuseöffnung A bis E diffusorartig erweitern und stufenlos in die jeweilige Ventilgehäuseöffnung A bis E übergehen. Die Ecken dieser im Querschnitt im Wesentlichen rechteckigen Ventilgehäuseöffnungen A bis E sind dabei zwecks zusätzlicher Optimierung der Strömung verrundet. Siehe hierzu die aus der Fig. 4 teilweise ersichtlichen Ventilgehäuseöffnungen des Ventilgehäuses 8.

Ferner ist aus der Fig. 4 ersichtlich, dass die im Querschnitt im Wesentlichen rechteckigen Ventilgehäuseöffnungen A bis E zumindest teilweise jeweils derart ausgebildet sind, dass eine senkrecht zu der Drehachse 10 verlaufende Breite dieser Ventilgehäuseöffnung kleiner als eine parallel zu der Drehachse 10 verlaufende Höhe dieser Ventilgehäuseöffnung ausgebildet ist, wobei sich die Breite entlang der konzentrisch zu der Drehachse 10 angeordneten Ventilgehäuseöffnung A bis E erstreckt. Zwar sind die Ventilgehäuseöffnungen A bis E in der Fig. 4 lediglich teilweise sichtbar. Jedoch sind die in der Fig. 4 verdeckten Ventilgehäuseöffnungen analog zu den sichtbaren Ventilgehäuseöffnungen ausgebildet.

Wie insbesondere aus den Fig. 2 bis 4 ersichtlich ist, sind die Anschlussstutzen 12, 14, 16, 18, 20 hier ventilgehäuseseitig in einem Winkel zur Drehachse 10 von größer 0° und von kleiner 90°, nämlich von 30° bis 60°, schräg nach oben oder unten verlaufend ausgebildet. Bei der Herstellung des gleichzeitig als erste Kanalschale ausgebildeten Ventilgehäuses 8 werden die vorgenannten, nicht dargestellten Schieber schräg nach unten bewegt, so dass der aus den Fig. 1 bis 4 ersichtliche gekrümmte Verlauf der Anschlussstutzen 12, 14, 16, 18, 20 in einem jeweils ventilgehäuseseitigen Abschnitt der Anschlussstutzen 12, 14, 16, 18, 20 fertigungstechnisch leicht verwirklichbar ist. Die freien Enden der Anschlussstutzen 12, 14, 16, 18, 20 sind jeweils als ein Schlauchanschluss, nämlich als ein Kupplungsteil einer Schlauchkupplung ausgeführt, wobei die Kupplung hier als eine Schnellkupplung ausgebildet ist.

Ferner ist das Ventilgehäuse 8 bei dem vorliegenden Ausführungsbeispiel derart formbar ausgebildet, dass eine der Ventildichtung zugewandte Dichtungsseite 9 des Ventilgehäuses 8 nach einem Entformen des Ventilgehäuses 8 im Wesentlichen gratfrei ausgebildet ist. Dies wird hier fertigungstechnisch beispielsweise dadurch umgesetzt, dass eine Formtrennung bei dem oben genannten Kunststoffspritzgussteil, nämlich dem Ventilgehäuse 8, an der Dichtungsseite 9 des Ventilgehäuses 8 konstruktiv vermieden wird.

Darüber hinaus ist das Ventilgehäuse 8 hier als ein integraler Bestandteil des als Kühlmitteltank ausgebildeten Flüssigkeitstanks 4 des Flüssigkeitssystems 2 des Fahrzeugs zur Bevorratung des in den Kühlmittelkreisläufen geführten Kühlmittels ausgebildet. Hierfür ist ein Tankgehäuse 24 des Flüssigkeitstanks 4 dreischalig ausgebildet, wobei das Ventilgehäuse 8 gleichzeitig als eine Tankgehäuseschale des Tankgehäuses 24 ausgebildet ist, nämlich, dass das Ventilgehäuse 8 als eine unterste Tankgehäuseschale des Tankgehäuses 24 ausgebildet ist. Neben dem als unterste Tankgehäuseschale ausgebildeten Ventilgehäuse 8 weist das Tankgehäuse 24 noch eine mittlere Tankgehäuseschale 26 und eine oberste Tankgehäuseschale 28 auf. Siehe hierzu die Fig. 1. Die zwei Tankgehäuseschalen 26, 28 sind jeweils ebenfalls als Kunststoffspritzgussteile ausgebildet und werden, analog zu den beiden vorgenannten Kanalschalen 8, 22 zur Ausbildung der Anschlussstutzen 12, 14, 16, 18, 20, miteinander und mit dem gleichzeitig als unterste Tankgehäuseschale ausgebildeten Ventilgehäuse 8 kunststoffverschweißt.

Entsprechend ist das Tankgehäuse 24 des als Kühlmitteltank ausgebildeten Flüssigkeitstanks 4 hier gleichzeitig als das Ventilgehäuse 8 für das Ventil 6 für das Flüssigkeitssystem 2 des Fahrzeugs ausgebildet. Somit umfasst der als Kühlmitteltank ausgebildete Flüssigkeitstank 4 bei dem vorliegenden Ausführungsbeispiel insgesamt drei Schalen, nämlich die gleichzeitig als Ventilgehäuse 8 und erste Kanalschale ausgebildete unterste Tankgehäuseschale, die mit der untersten Tankgehäuseschale 8 kunststoffverschweißte mittlere Tankgehäuseschale 26 und die mit der mittleren Tankgehäuseschale 26 kunststoffverschweißte oberste Tankgehäuseschale 28. Siehe hierzu die Fig. 1.

Die Fig. 2 und 3 sind dabei rein theoretische Ansichten des tatsächlichen Ventilgehäuses 8, die lediglich aufgrund einer verbesserten Übersichtlichkeit erstellt worden sind. In Wirklichkeit ist das Ventilgehäuse 8, wie oben erläutert, integraler Bestandteil des Tankgehäuses 24 des Flüssigkeitstanks 4. Die aus den Fig. 2 und 3 ersichtliche Fläche mit den die Ventilgehäuseöffnungen des Ventilgehäuses 8 kennzeichnenden Buchstaben A, B, C, D, E ist praktisch als die unterste Tankgehäuseschale ausgebildet und nicht lediglich zur Ausbildung des Ventilgehäuses 8 an sich und der ersten Kanalschale zur Ausbildung der Anschlussstutzen 12, 14, 16, 18, 20 gestaltet.

Im Nachfolgenden wird das Fahrzeug mit dem erfindungsgemäßen Flüssigkeitssystem gemäß dem vorliegenden Ausführungsbeispiel anhand der Fig. 1 bis 4 näher erläutert.

Zunächst werden die einzelnen Tankgehäuseschalen, nämlich das gleichzeitig als erste Kanalschale und unterste Tankgehäuseschale ausgebildete Ventilgehäuse 8, die mittlere Tankgehäuseschale 26 und die oberste Tankgehäuseschale 28 des Tankgehäuses 24 des Flüssigkeitstanks 4 sowie die zweite Kanalschale 22 auf dem Fachmann bekannte Weise jeweils als Kunststoffspritzgussteil einzeln, also voneinander getrennt, hergestellt.

Anschließend werden die einzelnen Tankgehäuseschalen 8, 26, 28 miteinander kunststoffverschweißt, so dass sich das Tankgehäuse 24 des Flüssigkeitstanks 4 ergibt. Siehe hierzu die Fig. 1.

Wie oben bereits ausgeführt, ist das in den Fig. 2 bis 4 in jeweils einer Einzeldarstellung dargestellte Ventilgehäuse 8 als ein integraler Bestandteil des vorgenannten Flüssigkeitstanks 4, nämlich des Tankgehäuses 24, ausgebildet.

In der Fig. 2 ist das gleichzeitig als erste Kanalschale ausgebildete Ventilgehäuse 8 in einer Einzeldarstellung gezeigt, so dass das Ventilgehäuse 8 gemäß der Fig. 2 noch nicht mit der zweiten Kanalschale 22 verbunden worden ist.

Zwecks Ausbildung der Anschlussstutzen 12, 14, 16, 18, 20 wird nun die zweite Kanalschale 22 mit dem gleichzeitig als erste Kanalschale ausgebildeten Ventilgehäuse 8 kunststoffverschweißt. Entsprechend ergeben sich die Anschlussstutzen 12, 14, 16, 18, 20 wie aus den Fig. 3 und 4 ersichtlich. Aus den Fig. 3 und 4 sind jeweils die bei dem vorgenannten Kunststoffschweißen entstehenden Nahtstellen 30 deutlich erkennbar. Siehe hierzu auch die Fig. 2 bis 4, insbesondere die Fig. 2 und 3, in einer Zusammenschau.

Zum Schluss wird nun das Ventil 6 dadurch komplettiert, dass in das Ventilgehäuse 8 zunächst die nicht dargestellte Ventildichtung und anschließend der ebenfalls nicht dargestellte Ventilkörper des Ventils 6 auf dem Fachmann an sich bekannte Art und Weise eingebracht und befestigt werden. Beispielsweise weist das Ventil 6 hierfür eine nicht dargestellte Abschlussplatte auf, die das Ventil 6 nach unten hin abschließt.

Diese Abschlussplatte wird bei dem vorliegenden Ausführungsbeispiel mittels dreier, nicht dargestellter Schrauben mit dem Ventilgehäuse 8 mechanisch verbunden. Siehe hierzu die Fig. 2 bis 4, in denen insgesamt drei Schraubdome 32 des Ventilgehäuses 8 zum Einschrauben der vorgenannten Schrauben dargestellt sind.

Aufgrund der erfindungsgemäßen Ausbildung des Ventils für ein Flüssigkeitssystem eines Fahrzeugs, des Flüssigkeitstanks für ein Flüssigkeitssystem eines Fahrzeugs und des Flüssigkeitssystems eines Fahrzeugs gemäß dem vorliegenden Ausführungsbeispiel sind das vorgenannte Ventil 6, der vorgenannte Flüssigkeitstank 4 und das vorgenannte Flüssigkeitssystem 2 auf konstruktiv und fertigungstechnisch besonders einfache Art und Weise realisierbar. Ferner ist dadurch eine Zentralisierung der Bauteile des Flüssigkeitssystems 2 für das Fahrzeug ermöglicht. Gleichzeitig ist eine strömungsoptimierte Formgebung der Anschlussstutzen 12, 14, 16, 18, 20 sowie der dazu korrespondierenden Ventilöffnungen A bis E des Flüssigkeitssystems 2 fertigungstechnisch leicht verwirklichbar.

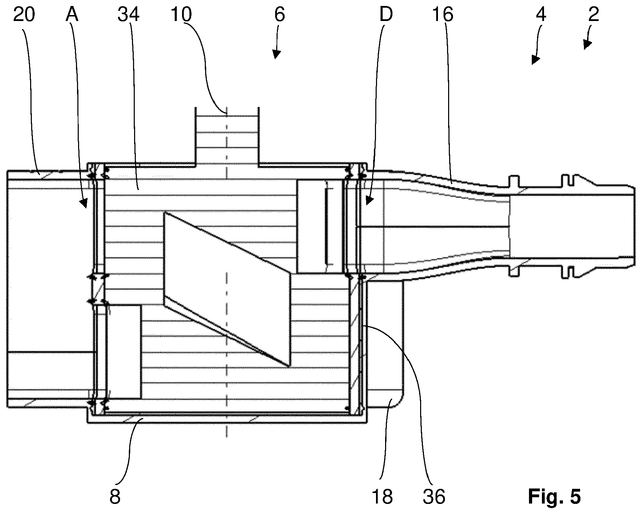

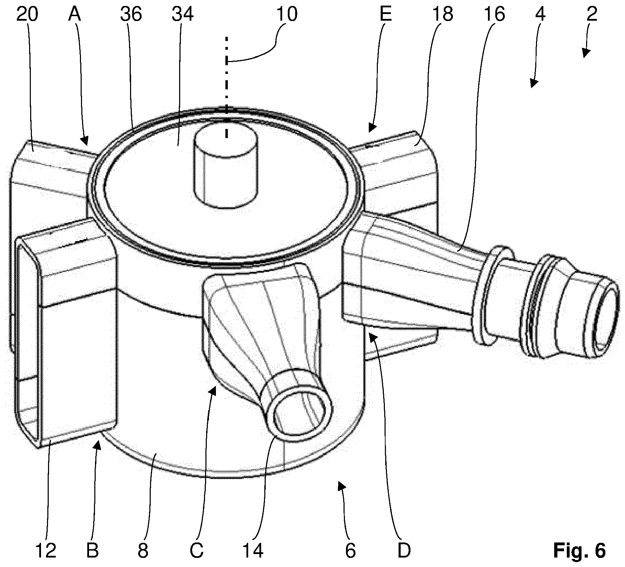

In den Fig. 5 und 6 ist ein zweites Ausführungsbeispiel des erfindungsgemäßen Flüssigkeitssystems teilweise dargestellt. Das zweite Ausführungsbeispiel wird hier lediglich im Umfang der Unterschiede zu dem ersten Ausführungsbeispiel kurz erläutert. Ansonsten wird auf die obigen Ausführungen zu dem ersten Ausführungsbeispiel verwiesen. Gleiche oder gleichwirkende Bauteile sind mit den gleichen Bezugszeichen versehen.

Im Unterschied zu dem ersten Ausführungsbeispiel sind bei dem zweiten Ausführungsbeispiel auch der um die Drehachse 10 drehbar angeordnete Ventilkörper 34 und die Ventildichtung 36 dargestellt. Die Anschlussstutzen 12, 14, 16, 18, 20 sind bei dem zweiten Ausführungsbeispiel zum einen lediglich teilweise dargestellt. Zum anderen ist aus den Fig. 5 und 6 des zweiten Ausführungsbeispiels der diffusorartige und damit stufenlose Übergang von der kreisrunden Strömungsdurchtrittsfläche an dem freien Ende des jeweiligen Anschlussstutzens 12, 14, 16, 18, 20 hin zu dem im Wesentlichen rechteckigen Querschnitt der dazu korrespondierenden Ventilgehäuseöffnung A bis E sehr gut ersichtlich. Die Darstellung des zweiten Ausführungsbeispiels in den Fig. 5 und 6 ist der Übersichtlichkeit wegen sehr stark vereinfacht. In Wirklichkeit entspricht das zweite Ausführungsbeispiel im Wesentlichen dem oben ausführlich erläuterten ersten Ausführungsbeispiel.

Die Erfindung ist nicht auf die vorliegenden Ausführungsbeispiele begrenzt. Beispielsweise ist die Erfindung auch bei anderen Arten von Fahrzeugen vorteilhaft einsetzbar. Dies gilt nicht lediglich für Landfahrzeuge, sondern auch für Luft- und Seefahrzeuge. Siehe hierzu auch die Beschreibungseinleitung.

Insbesondere ist die Erfindung nicht auf die konstruktiven und fertigungstechnischen Details der Ausführungsbeispiele beschränkt. Beispielsweise ist die Anzahl der Anschlussstutzen und der dazu korrespondierenden Ventilgehäuseöffnungen und Ventildichtungsöffnungen nicht auf die jeweilige Anzahl der Ausführungsbeispiele begrenzt, sondern je nach den Erfordernissen des Einzelfalls in den technischen Grenzen frei wählbar. Gleiches gilt für die räumliche Anordnung der einzelnen Anschlussstutzen, die ebenfalls in Abhängigkeit der räumlichen Gegebenheiten des jeweiligen Anwendungsfalls frei wählbar ist.

Denkbar ist auch, dass das Tankgehäuse lediglich aus zwei Tankgehäuseschalen ausgebildet ist. Jedoch ist auch jede andere sinnvolle Anzahl von Tankgehäuseschalen grundsätzlich möglich.

Im Unterschied zu den vorliegenden Ausführungsbeispielen kann das Ventil mittels dessen Ventilgehäuse auch lediglich an dem Tank, nämlich dem Tankgehäuse, befestigt sein. Entsprechend ist eine Integration des Ventilgehäuses in das Tankgehäuse nicht zwingend erforderlich. Ferner kann das Ventil auch an anderen geeigneten Komponenten des Fahrzeugs, beispielsweise einer Karosserie oder einem Antriebsmotor des Fahrzeugs, befestigt sein.

Selbstverständlich lässt sich die Erfindung nicht nur bei als Kühlmittelsystemen ausgebildeten Flüssigkeitssystemen eines Fahrzeugs vorteilhaft einsetzen. Entsprechend ist die Erfindung für eine Vielzahl von voneinander verschiedenen Anwendungsfällen verwendbar.

### Bezugszeichenliste

- 2: Flüssigkeitssystem
- 4: Flüssigkeitstank
- 6: Ventil
- 8: Ventilgehäuse, gleichzeitig als erste Kanalschale und als unterste Tankgehäuseschale ausgebildet
- 9: Dichtungsseite des Ventilgehäuses 8
- 10: Drehachse des Ventilkörpers des Ventils 6
- 12: Anschlussstutzen
- 14: Anschlussstutzen
- 16: Anschlussstutzen
- 18: Anschlussstutzen
- 20: Anschlussstutzen
- 22: Zweite Kanalschale
- 24: Tankgehäuse des Flüssigkeitstanks 4
- 26: Mittlere Tankgehäuseschale des Tankgehäuses 24
- 28: Oberste Tankgehäuseschale des Tankgehäuses 24
- 30: Nahtstelle, ausgebildet durch das Fügen des Ventilgehäuses 8 mit der zweiten Kanalschale 22
- 32: Schraubdome des Ventilgehäuses 8
- 34: Ventilkörper des Ventils 6
- 36: Ventildichtung des Ventils 6
- A bis E: Ventilgehäuseöffnungen des Ventilgehäuses 8

## Patentansprüche

1. Ventil (6) für ein Flüssigkeitssystem (2) eines Fahrzeugs, umfassend ein Ventilgehäuse (8) mit einer Mehrzahl von Ventilgehäuseöffnungen (A, B, C, D, E), einen in dem Ventilgehäuse (8) um eine Drehachse (10) drehbar angeordneten Ventilkörper (34) mit mindestens einem strömungsleitenden Verbindungskanal zur strömungsleitenden Verbindung von mindestens zwei Ventilgehäuseöffnungen (A, B, C, D, E) der Mehrzahl von Ventilgehäuseöffnungen (A, B, C, D, E), eine zwischen dem Ventilgehäuse (8) und dem Ventilkörper (34) angeordnete Ventildichtung (36) mit zu den Ventilgehäuseöffnungen (A, B, C, D, E) korrespondierenden Ventildichtungsöffnungen, einen Ventilantrieb zur automatischen Drehung des Ventilkörpers (34) um die Drehachse (10) und eine zu den Ventilgehäuseöffnungen (A, B, C, D, E) korrespondierende Mehrzahl von Anschlussstutzen (12, 14, 16, 18, 20) zur strömungsleitenden Verbindung des Ventils (6) mit einem Rest des Flüssigkeitssystems (2),
**dadurch gekennzeichnet,**
**dass** die Anschlussstutzen (12, 14, 16, 18, 20) an einem freien Ende des jeweiligen Anschlussstutzens (12, 14, 16, 18, 20) im Querschnitt eine kreisrunde Strömungsdurchtrittsfläche und die zu den Anschlussstutzen (12, 14, 16, 18, 20) korrespondierenden Ventilgehäuseöffnungen (A, B, C, D, E) jeweils einen im Wesentlichen rechteckigen Querschnitt aufweisen, wobei die jeweilige Ventilgehäuseöffnung (A, B, C, D, E) größer als die Strömungsdurchtrittsfläche an dem freien Ende des dazu korrespondierenden Anschlussstutzens (12, 14, 16, 18, 20) ist, und wobei sich die Strömungsdurchtrittsflächen der Anschlussstutzen (12, 14, 16, 18, 20) von dem freien Ende des jeweiligen Anschlussstutzens (12, 14, 16, 18, 20) bis zu der jeweils korrespondierenden Ventilgehäuseöffnung (A, B, C, D, E) diffusorartig erweitern und stufenlos in die jeweilige Ventilgehäuseöffnung (A, B, C, D, E) übergehen.

2. Ventil (6) nach Anspruch 1,
**dadurch gekennzeichnet,**
**dass** die im Querschnitt im Wesentlichen rechteckigen Ventilgehäuseöffnungen (A, B, C, D, E) zumindest teilweise, bevorzugt alle Ventilgehäuseöffnungen, jeweils derart ausgebildet sind, dass eine senkrecht zu der Drehachse (10) verlaufende Breite dieser Ventilgehäuseöffnung (A, B, C, D, E) kleiner als eine parallel zu der Drehachse (10) verlaufende Höhe dieser Ventilgehäuseöffnung (A, B, C, D, E) ausgebildet ist, bevorzugt, dass sich die Breite entlang der konzentrisch zu der Drehachse (10) angeordneten Ventilgehäuseöffnung (A, B, C, D, E) erstreckt.

3. Ventil (6) nach Anspruch 1 oder 2,
**dadurch gekennzeichnet,**
**dass** Ecken der im Querschnitt im Wesentlichen rechteckigen Ventilgehäuseöffnungen (A, B, C, D, E) verrundet ausgebildet sind.

4. Ventil (6) nach einem der Ansprüche 1 bis 3,
**dadurch gekennzeichnet,**
**dass** das freie Ende mindestens eines Anschlussstutzens (12, 14, 16, 18, 20) als ein Schlauchanschluss, bevorzugt als ein Kupplungsteil einer Schlauchkupplung, besonders bevorzugt als ein Schnellkupplungsteil, ausgebildet ist.

5. Ventil (6) nach einem der Ansprüche 1 bis 4,
**dadurch gekennzeichnet,**
**dass** die Anschlussstutzen (12, 14, 16, 18, 20) gemeinsam aus einer einzigen ersten Kanalschale und aus einer einzigen zweiten Kanalschale (22) ausgebildet sind, wobei die erste Kanalschale gleichzeitig als das Ventilgehäuse (8) ausgebildet ist, das zur Ausbildung der Anschlussstutzen (12, 14, 16, 18, 20) mit der zweiten Kanalschale (22) verbindbar ist.

6. Ventil (6) nach einem der Ansprüche 1 bis 5,
**dadurch gekennzeichnet,**
**dass** das Ventilgehäuse (8) und/oder der Ventilkörper (34) derart formbar ausgebildet sind/ist, dass eine der Ventildichtung (36) zugewandte Dichtungsseite (9) des Ventilgehäuses (8) und/oder des Ventilkörpers (34) nach einem Entformen des Ventilgehäuses (8) und/oder des Ventilkörpers (34) im Wesentlichen gratfrei ausgebildet ist.

7. Ventil (6) nach einem der Ansprüche 1 bis 6,
**dadurch gekennzeichnet,**
**dass** das Ventilgehäuse (8) als ein integraler Bestandteil eines Flüssigkeitstanks (4) des Flüssigkeitssystems (2), bevorzugt eines Kühlmitteltanks des Fahrzeugs zur Bevorratung von in dem als Kühlmittelsystem ausgebildeten Flüssigkeitssystem geführten Kühlmittel, ausgebildet ist.

8. Flüssigkeitstank (4) für ein Flüssigkeitssystem (2) eines Fahrzeugs, umfassend ein Tankgehäuse (24) zur Bevorratung einer Flüssigkeit des Fahrzeugs,
**dadurch gekennzeichnet,**
**dass** das Tankgehäuse (24) gleichzeitig als ein Ventilgehäuse (8) für ein Ventil (6) für das Flüssigkeitssystem (2) des Fahrzeugs ausgebildet ist, wobei das Ventil (6) nach einem der Ansprüche 1 bis 7 ausgebildet ist.

9. Flüssigkeitstank (4) nach Anspruch 8,
**dadurch gekennzeichnet,**
**dass** das Tankgehäuse (24) mehrschalig ausgebildet ist und eine Mehrzahl von Tankgehäuseschalen (8, 26, 28) aufweist, wobei eine der Tankgehäuseschalen gleichzeitig als das Ventilgehäuse (8) ausgebildet ist, bevorzugt, dass das Ventilgehäuse (8) als eine unterste Tankgehäuseschale des Tankgehäuses (24) ausgebildet ist.

10. Flüssigkeitssystem (2) eines Fahrzeugs, umfassend einen Flüssigkeitstank (4) zur Bevorratung einer Flüssigkeit des Flüssigkeitssystems (2), mindestens einen mit dem Flüssigkeitstank (4) strömungsleitend verbundenen Flüssigkeitskreislauf, in dem die Flüssigkeit zirkuliert, und ein mit dem Flüssigkeitskreislauf und/oder dem Flüssigkeitstank (4) strömungsleitend verbundenes Ventil (6) zur Steuerung mindestens eines Flüssigkeitsstromes der Flüssigkeit in dem Flüssigkeitssystem (2),
**dadurch gekennzeichnet,**
**dass** das Ventil (6) nach einem der Ansprüche 1 bis 7 und/oder der Flüssigkeitstank nach Anspruch 8 oder 9 ausgebildet ist.
